# EUROPEAN PATENT APPLICATION

(11) **EP 4 589 770 A1**
(43) Date of publication of application: **23.07.2025**
(21) Application number: 24220175.4
(22) Date of filing: 16.12.2024
(51) Int. Cl.: H01Q 1/24, H01Q 5/328, H01Q 5/35, H01Q 9/42

(54) **RADIO COMMUNICATION AT A FIRST FREQUENCY AND AT A SECOND DIFFERENT FREQUENCY**

(30) Priority: 19.01.2024 GB 202400740
(71) Applicant: Nokia Technologies Oy, 02610 Espoo (FI)
(72) Inventor: SVENDSEN, Simon, 9000 Aalborg (DK); CAPORAL DEL BARRIO, Samantha, 9000 Aalborg (DK)
(74) Representative: Nokia EPO representatives

(57) **Abstract**

An antenna system having at least a first operational bandwidth over at least a first frequency range and a second operational bandwidth over at least a second frequency range, higher frequency than the first frequency range comprising: an antenna radiator element;
at least a first feed for the first frequency range coupled to the antenna radiator element; a second feed for the second frequency range coupled to the antenna radiator element wherein the second frequency range is higher frequency than the first frequency range; and at least one discrete reactive component coupled to the antenna radiator element, wherein the at least one discrete reactive component has a self resonant frequency and wherein the at least one discrete reactive component is configured to control the first operational bandwidth (BW1) of the antenna system.

## Description

### TECHNOLOGICAL FIELD

Examples of the disclosure relate to radio communication at a first frequency and at a second different frequency.

### BACKGROUND

In modern radio communication systems, a transceiver apparatus is, in some examples, configured to communicate at a first frequency and at a second different frequency.

Because of the difference between the first frequency and the second frequency, for example, a difference of multiple factors, it is not possible to cover the first frequency range and the second frequency range using a single resonance.

Current practice is to use an antenna system that has an antenna radiator element sized for resonance at the lower first frequency and to use a different antenna system that has an array of antenna radiator elements sized for resonance at the higher second frequency.

### BRIEF SUMMARY

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4A, 4B show another example of the subject matter described herein;
FIG. 5A, 5B, 5C show another example of the subject matter described herein;
FIG. 6A, 6B show another example of the subject matter described herein;
FIG. 7A, 7B, 8 show another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

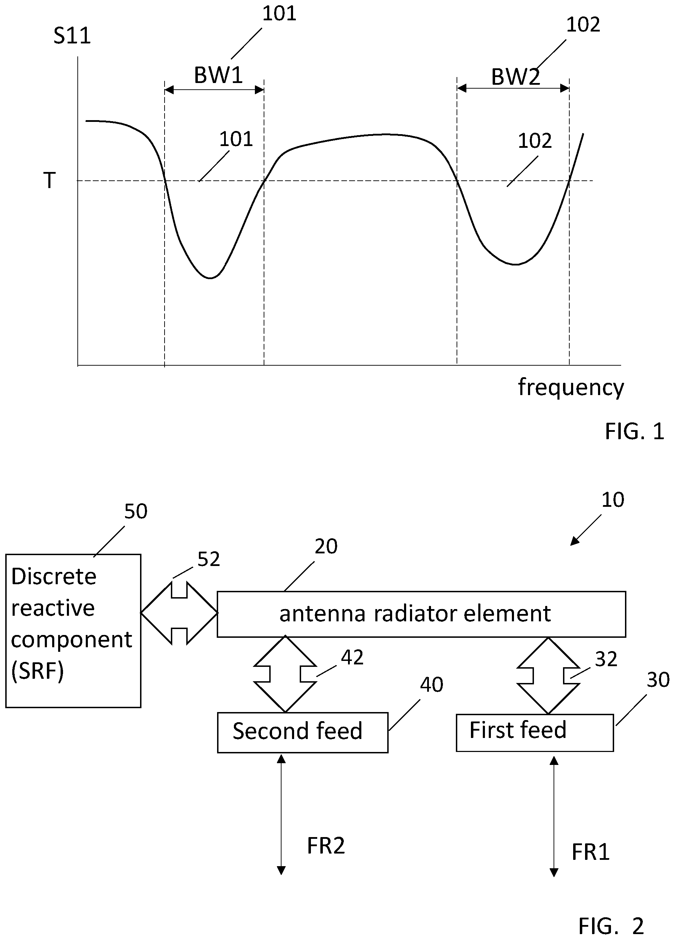

FIG. 1 illustrates a first operational bandwidth (BW1) over at least a first frequency range 101 and a second operational bandwidth (BW2) over at least a second frequency range 102, at higher frequency than the first frequency range 101.

An operational bandwidth is a frequency range over which an antenna system can operate.

The operational bandwidth is a frequency range over which a return loss of the antenna system is greater than an operational threshold and over which the antenna system is sufficiently efficient (radiation efficiency).

Radiation efficiency is the ratio of power delivered to a radiation resistance of an antenna (Rrad) to the total power delivered to the antenna and does not include power lost due to poor voltage standing wave ratio (VSWR), that is mismatch losses. A "total radiation efficiency" comprises the "radiation efficiency" and power lost due to poor VSWR. The efficiency operational threshold can be expressed in relation to "total radiation efficiency" or "radiation efficiency".

In FIG. 1, the return loss (|S11|) of the antenna system is greater than an operational threshold (e.g T) over the first frequency range 101 defining the first operational bandwidth (BW1). The return loss of the antenna system is greater than an operational threshold (e.g T) over the second frequency range 102 defining the second operational bandwidth (BW2).

The return loss thresholds used to define the first operational bandwidth (BW1) and the second operational bandwidth (BW2) can be the same or different.

The first operational bandwidth (BW1) and the second operational bandwidth (BW2) are distinct. The return loss of the antenna system is less than the operational threshold (e.g. T) over at least some of the frequency range between the first frequency range 101 defining the first operational bandwidth (BW1) and the second frequency range 102 defining the second operational bandwidth (BW1).

A network operational frequency range bandwidth (OFRBW) is an operational frequency range bandwidth specified for use in a network. In some examples, the first frequency range 101 (the first operational bandwidth) is configured to cover a first network operational frequency range bandwidth and the second frequency range 102 (second operational bandwidth) is configured to cover a second network operational frequency range bandwidth.

If the first frequency range 101 is the same as or larger than a first OFRBW, then there is no need to tune the antenna system to modify the first frequency range 101 because the entire first OFRBW is covered. If the first frequency range 101 is smaller than the first OFRBW, then the antenna system may likely need to be tuned to modify (e.g. shift) the first frequency range 101 to cover different parts of the first OFRBW. The tuning can, for example, shift an operational resonant frequency. In some examples, tuning can, for example, change a position of the first frequency range. In some examples, tuning can, for example, change a size of the first frequency range. In some examples, tuning can, for example, change total radiation efficiency over the first frequency range.

FIG 2 illustrates an example of an antenna system 10 having at least a first operational bandwidth over a first frequency range 101 and a second operational bandwidth over a second frequency range 102, at higher frequency than the first frequency range 101.

The antenna system 10 comprises:
an antenna radiator element 20;
at least a first feed 30 for the first frequency range 101 coupled 32 to the antenna radiator element 20 and
a second feed 40 for the second frequency range 102 coupled 42 to the antenna radiator element 20 wherein the second frequency range 102 is at higher frequency than the first frequency range 101; and
at least one discrete reactive component 50 coupled 52 to the antenna radiator element 20 wherein the at least one discrete reactive component 50 has a self resonant frequency and wherein the at least one discrete reactive component 50 is configured to control the first operational bandwidth (BW1) of the antenna system 22.

If the at least one discrete reactive component 50 were to be removed then the first operational bandwidth (BW1) of the antenna system 10 would change, for example shift in frequency and the first frequency range 101 would also change. The at least one discrete reactive component 50 provides tuning. It can, for example, shift an operational resonant frequency. In some examples, it can, for example, change a position of the first frequency range. In some examples, it can, for example, change a size of the first frequency range. In some examples, it can, for example, change radiation efficiency over the first frequency range.

The at least one discrete reactive component 50 is configured to control the first frequency range 101 of the first operational bandwidth (BW1). For example, the at least one discrete reactive component 50 is configured to increase or decrease a central frequency of the first frequency range 101, and/or increase or decrease a lowest frequency of the first frequency range 101 and/or increase or decrease a highest frequency of the first frequency range 101.

The self resonant frequency of a discrete reactive component 50 is the frequency at which the impedance of the discrete reactive component 50 becomes extremely high. This can, for example, be because the complex impedance has a pole at the self resonant frequency.

The high impedance can, for example occur when the discrete reactive component 50 comprises a parallel capacitance (C) and inductance (L) which forms a resonance parallel LC circuit.

In the illustrated example the self resonant frequency of a discrete reactive component 50 is greater than the first frequency range 101 and less than the second frequency range 102.

However, although the self resonant frequency of the discrete reactive component 50 is greater than the first frequency range 101, in other examples it is not necessarily less than the second frequency range 102.

In some but not necessarily all examples, the self resonant frequency of a discrete reactive component 50 is less than the second frequency range 102.

In some but not necessarily all examples, some or all of the second frequency range 102 is greater than the self resonant frequency.

In some but not necessarily all examples, the first frequency range 101 is less than 8 GHz. In some but not necessarily all examples, second frequency range 102 is greater than 14 GHz.

In some but not necessarily all examples, the first frequency range 101 (center frequency F1) and the second frequency range 102 (center frequency F2) are separated by multiple factors. That is F2= k.F1 where k is a Real Number and k >2 or 3. In some examples, F1 is less that 8GHz and F2 is greater than 24GHz GHz. Thus in some examples, the first frequency range 101 and the second frequency range 102 are separated by more than 10 GHz.

The discrete reactive component 50 is characterized for frequencies including all of the first frequency range 101. The reactive load/value across the first frequency range 101 is specified by the manufacturer.

In some examples, the discrete reactive component 50 is characterized for frequencies above the first frequency range 101 including some or all of the second frequency range102. The reactive load/value across the higher frequency range is specified by the manufacturer.

In at least some examples, the discrete reactive component 50 is uncharacterized for frequencies including at least some of the second frequency range 102. The reactive load across at least some of the second frequency range 102 is not specified by the manufacturer and, as such, is unknown.

The coupling 32 of the first feed 30 to the antenna radiator element 20 can be direct or indirect. The coupling 32 can, for example, be a galvanic (in other words, a direct current would be able to flow between the first feed 30 and radiator element 20) or electromagnetic/ capacitive/ inductive coupling over a non-conductive gap.

The coupling 42 of the second feed 40 to the antenna radiator element 20 can be direct or indirect. The coupling 42 can, for example, be a galvanic (direct current) or electromagnetic/ capacitive/ inductive coupling over a non-conductive gap.

The coupling 52 of the discrete reactive component 50 to the antenna radiator element 20 can be direct or indirect. The coupling 52 can, for example, be a galvanic (direct current) or electromagnetic/ capacitive/ inductive coupling over a non-conductive gap.

Referring back to FIG 1 in at least some examples, the first operational bandwidth 101 of the antenna system 10 is an operational bandwidth including a local S11 /Reflection coefficient minimum (return loss maximum). The first frequency range 101 defining the first operational frequency band is at/near a first order resonance frequency of the antenna system 10. The second frequency range 102 defining the second operational frequency band is far from the first order resonant frequency of the antenna system 10.

In at least some examples, the first frequency range 101 is impedance matched (for example at a S11 more negative than -6dB).

In at least some examples, the second frequency range 102 is impedance matched (for example at a S11 more negative than -6dB).

In some examples, the second operational bandwidth 102 of the antenna system 10 is an operational bandwidth and includes a local S11/reflection coefficient minimum (return loss maximum). For example, the second frequency range 102 defining the second operational frequency band is at/near a higher order (greater than first order) resonant frequency of the antenna system 10.

In some examples, the second operational bandwidth 102 of the antenna system 10 is an operational bandwidth but does not include a local S11/reflection coefficient minimum (return loss maximum). For example, the second frequency range 102 defining the second operational frequency band is not at/near a resonant frequency of the antenna system 10. For example, the second frequency range 102 defining the second operational frequency band is far from the first order resonant frequency of the antenna system 10 and is distant from higher order resonant frequencies of the antenna system 10. For example, the second frequency range 102 defining the second operational frequency band is above the first order resonant frequency of the antenna system 10 and below a higher order resonant frequency of the antenna system 10.

In some examples, the antenna radiator element 20 is a resonant element at the first frequency range 101 and is not a resonant element at the second frequency range 102. In some examples, the antenna radiator element 20 is electrically large at the second frequency range 102. The term electrically large means that the antenna radiator element 20 has one or more dimensions that has a size greater than multiple wavelengths at the second operational frequency range 102. For example, in at least some examples, the antenna radiator element 20 has a maximum dimension that has a size greater than 2λ, where λ is the largest wavelength of the second frequency range 102.

A resonance of the antenna radiator element 20 and/or an impedance match of the first frequency range 101 can be aperture tuned and/or impedance matched. Using aperture tuning, an electrical length of the antenna radiator element 20 is adjusted to shift resonance. Impedance matching can broaden the antenna system operational bandwidth and/or improve return loss and total radiation efficiency but it does not improve antenna radiation efficiency.

Impedance matching of an antenna system 10 is used to achieve favorable characteristics such as an acceptable return loss (|S11|) and total radiation efficiency over a frequency range of interest.

In at least some examples, the resonance of the antenna radiator element 20 is tuned and/or an impedance match at the first frequency range 101 is matched by the at least one discrete reactive component 50.

In at least some examples, the impedance match at the second frequency range 101 is not tuned by the at least one discrete reactive component 50.

A sensitivity of the first frequency range 101 defining the first operational bandwidth to changes of the at least one discrete reactive component 50 is orders of magnitude greater than a sensitivity of the second frequency range 101 defining the second operational bandwidth to changes of the at least one discrete reactive component 50.

In at least some examples, the at least one discrete reactive component 50 is changeable and the resonance of the antenna radiator element 20 and/or an impedance match at the first frequency range 101 is tuned by changes of the at least one discrete reactive component 50.

In at least some examples, the antenna system 10 has an electrical length, for the first frequency range 101, dependent upon the discrete reactive component 50. The antenna system 10 has a resonant frequency dependent upon the electrical length, for the first frequency range 101, dependent upon the discrete reactive component 50.

In some examples, the first frequency range 101 associated with a first discrete reactive component(s) 50 or component value is sufficient to cover a first network operational frequency range bandwidth (OFRBW) but is not sufficient to cover a second network operational frequency range bandwidth (OFRBW) close to the first network operational frequency range bandwidth (OFRBW).

In some examples, the first frequency range 101 associated with a second first discrete reactive component(s) 50 or component value is sufficient to cover second network operational frequency range bandwidth (OFRBW). In some examples, the first frequency range 101 associated with the second first discrete reactive component(s) 50 is sufficient to cover second network operational frequency range bandwidth and the first network operational frequency range bandwidth (OFRBW). In other examples, the first frequency range 101 associated with the second first discrete reactive component(s) 50 is sufficient to cover second network operational frequency range bandwidth but not the first network operational frequency range bandwidth (OFRBW).

The antenna system 10, when using the first discrete reactive component(s) 50, is operational in the first network operational frequency range bandwidth (OFRBW) but not the second network operational frequency range bandwidth (OFRBW). The first frequency range 101 associated with the first discrete reactive component(s) 50 covers the first network operational frequency range bandwidth (OFRBW) but not the second network operational frequency range bandwidth (OFRBW).

The antenna system 10, when using the second discrete reactive component(s) 50, is operational in the second network operational frequency range bandwidth (OFRBW). The first frequency range 101 associated with the second discrete reactive component(s) 50 covers the second network operational frequency range bandwidth (OFRBW).

In some examples, the antenna system 10, is configured to switch between using different discrete reactive component(s) 50 or different combinations of discrete reactive component(s) 50 to change the network operational frequency range bandwidths (OFRBW) covered by the antenna system 10. In some examples, the antenna system 10, is configured to change the value of a discrete reactive component 50 (for example, a tunable capacitor) to change the network operational frequency range bandwidths (OFRBW) covered by the antenna system 10.

For example a Sub-6 GHz network operational frequency range bandwidth (OFRBW) may be of a bandwidth which an antenna system 10 may not be able to cover on its own (i.e. without tuning the resonant frequency of the antenna radiator element 20 from one part of the overall frequency range to another part of the overall frequency range), and the tuning of the antenna system 10 is controlled by tuning using selectable discrete reactive component(s) 50.

In some examples, the antenna radiator element 20 has a natural resonance associated with a given bandwidth attributed by its physical structure (electrical length and coupling to the reference ground plane), so if this is not enough bandwidth to cover the whole of the network operational frequency range bandwidth (OFRBW) for Sub-6 GHz or Sub 1-GHz then it will need to be tuned using discrete reactive component(s) 50.

In at least some examples, the antenna system 10 is configurable to support different bands and carrier aggregation combinations and is usable across many countries, networks etc.

In at least some examples, the antenna system 10 comprises multiple discrete reactive components 50, configured for tuning at the first frequency range.

In at least some examples, the antenna system 10 is configured so that the discrete reactive component(s) 50 tune at the first frequency range but not at the second frequency range.

In at least some examples, the antenna system 10 is configured to bypass the discrete reactive component(s) 50 at the second frequency range but not at the first frequency range.

In at least some examples, the antenna system 10 comprises a high pass filter that provides a bypass around the discrete reactive component(s) 50 at the second frequency range but not at the first frequency range.

In at least some examples, the antenna system 10 comprises a low pass filter comprising multiple discrete reactive components 50, wherein the low pass filter is coupled to the antenna radiator element 20 and has a self resonant frequency dependent upon a selected reactive component of the multiple discrete reactive components 50, wherein the discrete reactive components 50 are configured for tuning at the first frequency range and bypassed at the second frequency range 102 by the high-pass filter.

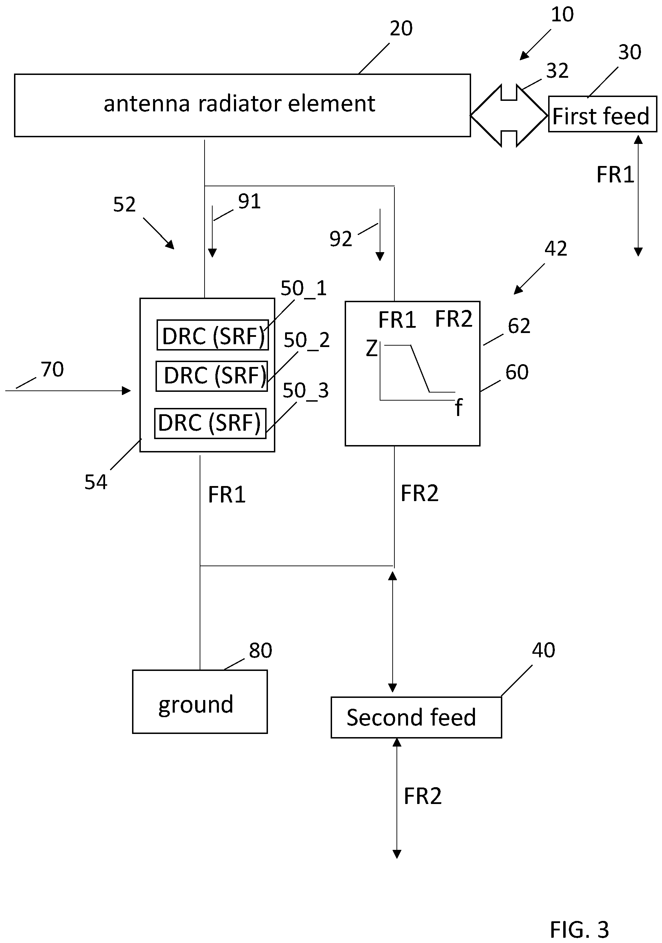

FIG 3 illustrates an example of an antenna system 10 as previously described.

The second feed 40 is proximal to the at least one discrete reactive component 50. The first feed 30 is distal from the at least one discrete reactive component 50.

The discrete reactive component(s) 50 couples to a ground plane 80.

The antenna system 10 has a preferred first current path 91 at the first frequency range 101 and a preferred second current path 92 at the second frequency range 102. The at least one discrete reactive component 50 is in the first current path 91 and is not in the second current path 92. The discrete reactive component 50 is bypassed by the second current path 92 at the second frequency range 102.

The second current path 92, where it bypasses the discrete reactive component(s) 50, has a relatively low impedance at the second frequency range 102 and a relatively high impedance at the first frequency range 101.

The first current path 91, passing through the discrete reactive component(s) 50, has a relatively low impedance at the first frequency range 101 and a relatively high impedance at the second frequency range 102.

In these examples, the first current path 91 and the second current path 92 are parallel. The first current path 91 and the second current path 92 provide different paths to ground at the respective first frequency range 101 and the second frequency range 102. The first current path 91 is a low impedance current path to ground at the first frequency range 101 and a high impedance path at the second frequency range 102. The second current path 92 is a low impedance current path to ground at the second frequency range 102 and a high impedance path at the first frequency range 101.

In some examples, the discrete reactive component 50 is an inductor. In some examples, the inductor is positioned at a region of higher current density in the first current path 91 at the first frequency range 101. The higher current density is higher relative to lower current density in the current path 91.

In some examples, the discrete reactive component 50 is a capacitor. In some examples, the capacitor is positioned at a region of higher electric field in the first current path 91 at the first frequency range 101 The higher electric field is higher relative to lower electric field associated with the current path 91.

In at least some examples, the antenna system 10 comprises a configurable low pass filter 54 comprising multiple discrete reactive component(s) 50_1, 50_2, 50_3 and/or one or more discrete reactive components with tunable values.

The first frequency range 101 might not have to be tuned, and a discrete reactive component 50 is used to impedance match the first frequency range. A bypass for the second frequency range 102 is needed due to the SRF of that discrete component.

The configurable low pass filter 54 uses at least one of the multiple discrete reactive component(s) 50_1, 50_2, 50_3 in the first current path 91, in dependence upon a received selection signal 70.

The configurable low pass filter 54 is coupled to the antenna radiator element 20 and has a self resonant frequency dependent upon the selected at least one of the multiple discrete reactive component(s) 50_1, 50_2, 50_3.

The multiple discrete reactive component(s) 50_1, 50_2, 50_3 are configured for tuning at the first frequency range 101.

At the second frequency range 102, the bypass 60 bypasses the configurable low pass filter 54.

In some examples, the configurable low pass filter 54 is provided as an integrated circuit (IC) with different pins which can be connected directly to ground or one or more reactive component can be connected at one end to one of the pins and the other end of the component connected to ground. If all pins have at least one reactive component, where each component is a different value of inductance, then when a switch is controlled 70 by software any or all of the pins can be brought into circuit and connected to the antenna radiator element 20 at a RF (Radio Frequency) pin, as one example. This type of IC can be used for active tuning and/or active impedance matching.

In at least some examples, the antenna system 10 comprises a bypass 60 configured to bypass the discrete reactive component(s) 50 at the second frequency range but not at the first frequency range.

In at least some examples, the antenna system 10 comprises a high pass filter 62 that provides a bypass around the discrete reactive component(s) 50 at the second frequency range but not at the first frequency range.

In this example, a passive high pass filter 62 is configured to couple the at least one discrete reactive component 50 to the antenna radiator element 20 at the first frequency range by providing a high impedance second current path 92 and is configured to de-couple the at least one discrete reactive component 50 from the antenna radiator element 20 at the second frequency range by providing a low impedance second current path 92.

The impedance of the second current path 92 including the passive high pass filter 62 is orders of magnitude greater than the impedance of the first current path 91 at the first frequency range 101.

The impedance of the second current path 92 including the passive high pass filter 62 is orders of magnitude less than the impedance of the first current path 91 at the second frequency range 102.

The passive high pass filter 62 is arranged in parallel to the configurable low pass filter 54 and provides a shunt to ground 80 around the configurable low pass filter 64.

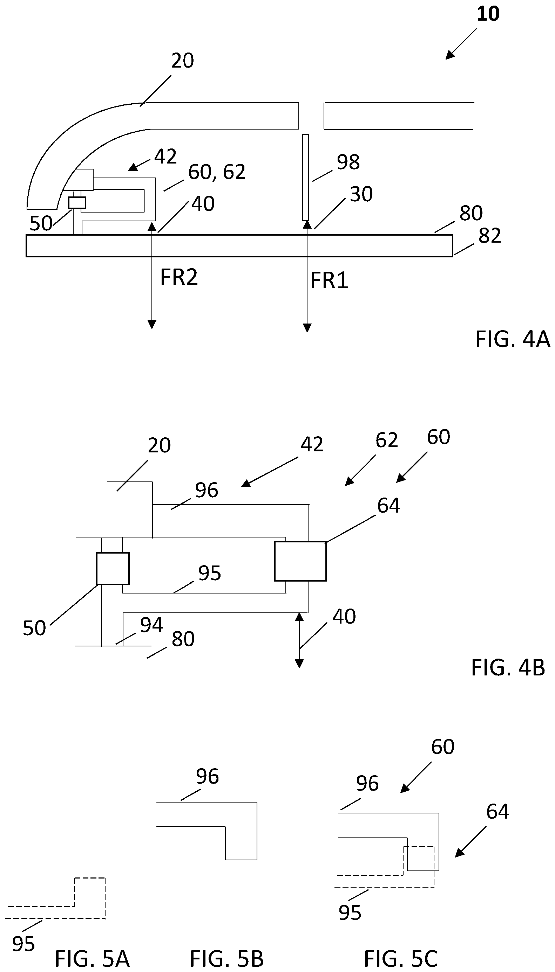

FIG 4A illustrates an example of the antenna systems 10 as previously described.

In this example, the antenna radiator element 20 is a conductive member and is, for example, part of a metallic housing of an apparatus.

The housing may be manufactured or provided as:
(a) a 100% solid metal part, or
(b) as a non-conductive part acting as a support for at least a portion which is conductive, where the conductive portion is:
   (i) integrated with the non-conductive part in some way (e.g. a sheet metal part heat-staked to the non-conductive part on any surface(s) thereof), or
   (ii) over-molded so that at least a part of the conductive portion is encapsulated by the non-conductive material, or
   (iii) the non-conductive parts and conductive parts are provided by Laser Direct Structuring (LDS) or Molded Interconnect Device (MID) processes, or
   (iv) the conductive part is provided as a flexible circuit board or flexi-circuit which is either 100% flexible or semi-rigid, as non-limiting examples.

The ground plane 80 is part of a printed circuit board 82 or other substrate which carries/supports other components and interconnecting tracks.

The first feed 30 is an indirect feed that is coupled to the antenna radiator element 20 via conductive element 98 which is conductively separated from the antenna radiator element 20 and the ground plane 80. The whole of conductive element 98 can be integrated on a printed circuit board (PCB).

In some examples, the lower portion of the conductive element 98 will couple to RF circuitry on the PCB 82 or be directly connected to a signal transmission line on the PCB 82.

The second feed 40 is coupled to a bypass 60. The bypass 60 provides a bypass between the antenna radiator element 20 and ground 80 around the discrete reactive component(s) 50.

The bypass 60 comprises a high-pass filter 62 coupled between the antenna radiator element 20 and ground 80.

In this example, as illustrated in more detail in FIG 4B, the bypass 60 comprises a first conductive element 96 directly coupled to the antenna radiator element 20, a second conductive element 95 directly coupled to ground plane 80 and one or more reactive elements 64 connected between the first conductive element 96 and the second conductive element 95. The reactive elements 64 can for example be reactive components (reactive lumped elements) or reactive distributed elements for example microstrip/stripline/co-planar waveguide/slotline/etc

In the illustrated example, the first current path and the second current path jointly connect to the ground plane 80 join conductive portion 94. However, in other examples, the first current path and the second current path separately join the ground plane 80. That is the second conductive element 95 connects directly to the ground plane without connecting to the conductive portion 94 connecting the reactive component 50 to the ground plane 80. It is desirable to have some physical separation between where the second conductive element 95 joins directly to the ground plane 80 and the second feed 40.

In the example illustrated in FIG 5A, 5B, 5C, the reactive element 64 is a capacitor formed by overlapping portions of the first conductive element 96 and the second conductive element 95.

The conductive elements 95, 96 can be provided as a microstrip/stripline formed from printed conductive tracks or conductive tracks disposed on a ceramic substrate to control mechanical tolerances and the capacitance produced across the gap.

FIG 5A, illustrates the second conductive element 95 only. FIG 5B, illustrates the first conductive element 96 only. FIG 5C, illustrates both the second conductive element 95 and the element first conductive element 96 in an overlapping, separated arrangement that forms a parallel plane capacitor 64.

The characteristics of the passive high pass filter 62 can, for example, be controlled by controlling the capacitance of capacitor 64.This can, for example, be controlled by varying the area of overlap between the overlapping portions of the first and second conductive elements 95, 96; varying the distance between the overlapping portions of the first and second conductive elements 95, 96; and/or varying the dielectric between the overlapping portions of the first and second conductive elements 95, 96.

The capacitor could alternatively be designed as an interdigital capacitor where each of the open ends of 95 and 96 are designed as conductive fingers which are interlaced together to form coupling between fingers. This would mean that the two conductive elements 95, 96 would be on the same plane/side of a supporting substrate.

The characteristics of the passive high pass filter 62 can, for example, be controlled by controlling an inductance of the first conductive element 96 and/or the second conductive element 95. This can be controlled by varying a length and/or width of the conductive elements 95, 96.

The passive circuit 62, in this example, comprises a series LC circuit tuned to the second frequency range 102.

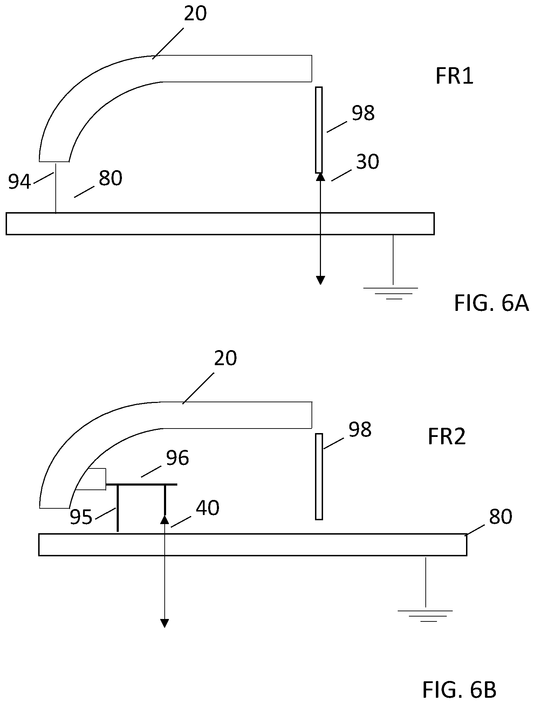

The operation of the antenna system 10 at the first frequency range 101 is illustrated in FIG 6A. The operation of the antenna system 10 at the second frequency range 102 is illustrated in FIG 6B.

At the first frequency range 101, as illustrated in FIG 6A, the first feed 30 is the active feed. The bypass 60 is non-operational. The antenna system 10 operates as a capacitively fed L-antenna.

At the second frequency range 102, as illustrated in FIG 6B, the second feed 40 is the active feed. The bypass 60 is operational coupling the second feed 40 to ground plane 80 and the antenna radiator element 20 via the first and second conductive elements 95, 96. The antenna system 10 operates as a F-antenna with capacitive load or an inductive fed loop-antenna. The antenna radiator element 20 can have any suitable shape. The antenna radiator element 20 can be planar and extend into the plane of FIG 6. The antenna radiator element 20 can be a long thin element or a square or rectangular element (extending into the plane of FIG 6).

In the preceding examples, the first frequency range 101 can be any frequency range that is lower than the second frequency range 102.

In a Third Generation Partnership (3GPP) compliant antenna system 10, the first frequency range 101 can comprise some of all of the "3GPP first frequency range" (3GPP FR1) and the second frequency range 102 can comprise some of all of the "3GPP second frequency range" (3GPP FR2). Currently, the "3GPP first frequency range" (3GPP FR1) is between 410MHz and 7125MHz. Currently, the "3GPP second frequency range" (3GPP FR2) is between 24250MHz and 52600MHz and between 52600MHz and 71000MHz.

Other bands could be:
4 400-4 800 MHz (in EMEA and Asia Pacific)
7 125-8 400 MHz (excluding of 7250-7750 MHz in Europe due to use by NATO) 14.8-15.35 GHz global

In a Third Generation Partnership compliant antenna system 10, the first frequency range 101 can be a range within 410MHz to 7125MHz and the second frequency range 102 can be a range within 24250MHz to 52600MHz or within 52600MHz to 71000MHz. In a Third Generation Partnership compliant antenna system 10, the 3GPP first frequency range" (3GPP FR1) comprises a number of different frequency bands. These frequency bands have specified low, middle, and high frequencies. The difference between the low and high frequency is the maximum bandwidth of the band. The maximum bandwidth of the band is equal to or greater than 5MHz. The higher capacity bands have a maximum bandwidth of the band that is equal to or greater than 50M Hz.

In some examples, the size of first frequency range 101 is at least 50MHz and less than 400MHz.

In some examples, the size of the second frequency range 102 is at least 100MHz. In some examples, the size of the second frequency range 102 is at least 400MHz. In some examples, the size of the second frequency range 102 is at least 1GHz.

The antenna system 10 as described in any of the examples is configured for simultaneous operation using the first operational bandwidth and the second operational bandwidth.

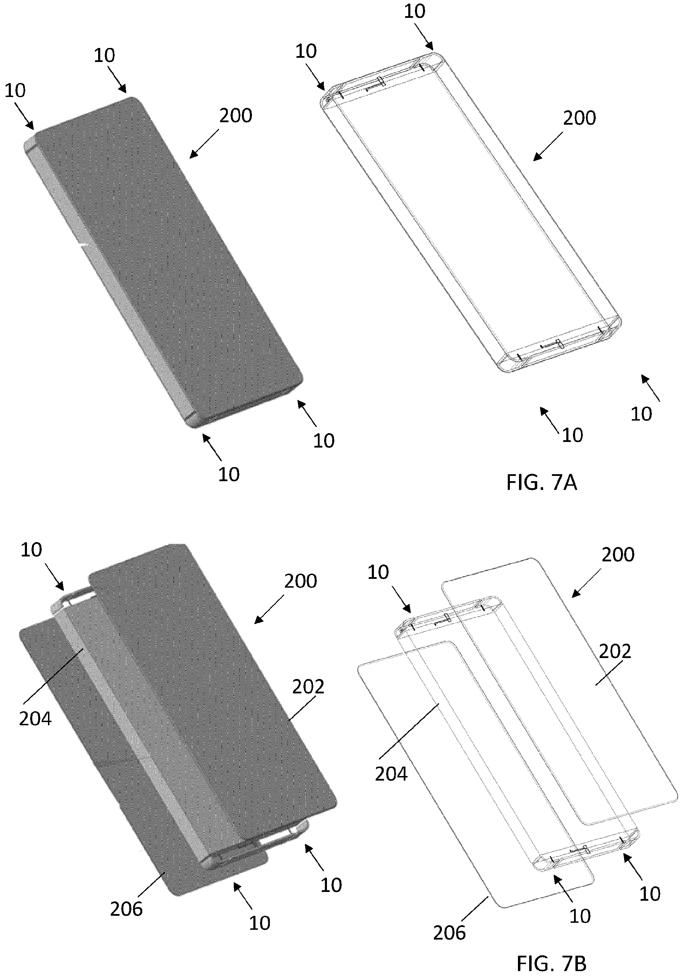

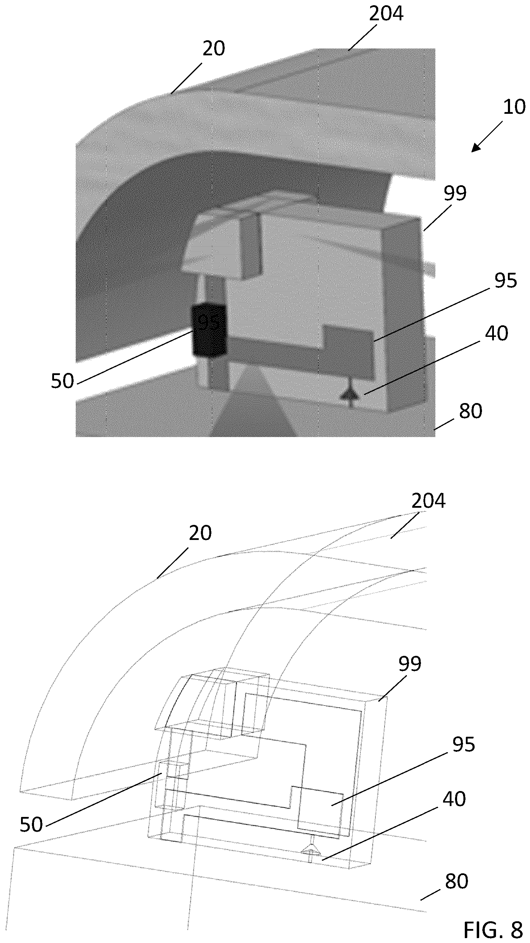

FIG 7A illustrates an example of an apparatus 200 comprising one or more antenna systems 10. FIG 7B illustrates the apparatus 200 of FIG 7A using an exploded view. FIG 8 illustrates an example of an antenna system 10 as previously described. This antenna system 10, can for example, be used in the apparatus 200.

This combination of the conductive elements 95, 96 can, for example, be provided as a grounding assembly module that is connected/soldered to the PCB 82 and the antenna radiator is placed on top of it and makes contact with the module.

The other feed 98 may or may not be part of this module and may be a feed module in its own right too in some examples.

In FIG 7A, the apparatus 200 has an antenna system 10 at each of four corners. As illustrated in FIG 7B, a metallic chassis 204 supports a front glass portion 202 and a rear glass portion 206 in this example. Other materials, for example plastics, could be used for at least a part of the front and/or rear portions 202, 206. The antenna radiator element 20 of the antenna system 10 is formed from a part of a metallic chassis 204 of the apparatus 200. As illustrated in FIG 8, the first conductive element 96 (not illustrated) and the second conductive element 95 are formed on opposite sides of a printed circuit board 99 carrying the one or more discrete reactive components 50.

In some but not necessarily all examples, the apparatus 200 is a hand-portable radio communication apparatus, for example a personal cellular telephone.

The apparatus 200 is configured for simultaneous operation of an antenna system 10 using the first frequency range 101 and the second frequency range 102.

The antenna system 10 operates at both the first frequency range 101 and the second frequency range 102 using a single, common antenna radiator element 20. The antenna system 10 operates at the second frequency range 102 without using a patch antenna or an antenna array and avoids the requirement for a separate PCB for higher frequency operation.

The antenna system 10 is a module for use at the first frequency range 101. It can also be used at the second frequency range 102.

The apparatus 200 can have multiple antenna systems 10 at different locations (spatial diversity) and can switch between which antenna system 10 is used for which frequency range 101, 102 to improve operation. Simultaneous use of multiple antenna systems for a single frequency range can be used to support multiple-input multiple-output (MIMO).

In some examples, there is provided an antenna system 10 having at least a first operational bandwidth over a first frequency range 101 and a second operational bandwidth over a second frequency range 102, higher than the first frequency range 101 comprising:
an antenna radiator element 20;
at least a first feed 30 for the first frequency range 101 coupled to the antenna radiator element 20 and
a second feed 40 for the second frequency range 102 coupled to the antenna radiator element 20;
at least one discrete reactive component 50 coupled to the antenna radiator element 20 wherein the at least one discrete reactive component 50 has a self resonant frequency and wherein the at least one discrete reactive component 50 is configured to control the first operational bandwidth of the antenna system and the self resonant frequency is greater than (at a higher frequency than) the first frequency range and the first frequency range 101 is less than the second frequency range 102.

In some examples, the apparatus 200 therefore comprises:
a ground plane 80;
a conductive member 20 for conveying radio frequency, RF, signals in a first frequency range 101 and a second frequency range 102,
wherein the second frequency range 102 is higher than the first frequency range 101; a first feed 30 configured to convey RF signals in the first frequency range 101 between
a first transceiver (not illustrated) and the conductive member 20 at a first portion of the conductive member 20;
a second feed 40 configured to convey RF signals in the second frequency range 102 between a second transceiver (not illustrated) and the conductive member 20 at a second different portion of the conductive member 20,
a capacitor 64 disposed between the second feed 40 and the second portion of the conductive member 20;
an inductor 50 disposed between the second portion of the conductive member 20 and the ground plane 800.

The first feed 30 is configured for the first frequency range 101 below a self-resonance of the inductor 50, where the first frequency band is tunable and where the tunability is enabled with the inductor 50.

The second feed 40 is configured for the second frequency range 102 above the self-resonance of the inductor 50, where the second feed 40 is not using the inductor 50.

In the following 3GPP FR1 is referred to as "sub-6 GHz" and 3GPP FR2 is referred to as "mmWave".

Typical mmWave UE antenna designs are primarily antenna arrays e.g. 1x4 linear patch arrays. Antenna arrays increase the antenna gain for long range propagation at higher frequencies. However, array technology on handsets has some drawbacks including additional space/volume requirements and cost, etc. The space in devices like smartphone is very limited and the total radiation efficiency performance of mmWave antenna arrays is low. This low performance is reflected in the 3GPP requirements for minimum peak EIRP for Power Class 3, which is only at 22.4 dBm for system bands at 28 GHz. Indeed, assuming a power amplifier delivers power at 23 dBm and a 1x4 antenna array with an antenna gain of 12 dBi, a requirement of 22.4 dBm allows for an antenna array insertion loss of up to 12 dB, where such a device will still be compliant.

The matching of the antenna feed at mmWave is typically done without discrete components since their behavior is uncharacterized, unpredictable at mmWave. However, sub-6GHz antenna are typically designed including antenna resonance tuning/matching, which includes discrete inductors and/or capacitors, where the typical discrete tuning/matching L,C components have a Self-Resonance Frequency (SRF) around 7 to 12 GHz.

The tolerance of inductors is characterized for the frequency range of use, below the SRF, and is unknown at frequencies higher that the SRF. As such, the effects are difficult to include in the design of the impedance match at mmWave frequency range, even if the sub-6GHz inductance is kept constant.

In some examples, the first frequency range 101 (i.e. FR1 sub-6GHz) is below the SRF of the tuning/matching components used, while the second frequency range 102 (i.e. FR2 mmWave) is above the SRF.

If a radiating structure is simultaneously fed with two different operating frequencies, the two resonances will affect each other. This would be especially problematic when the sub-6GHz resonance is tuned to cover different system bands (frequencies) using discrete components that have a SRF lower than the mmWave frequencies. The SRF of a typical discrete component used for antenna tuning is between 7 to 12 GHz, thus they are uncharacterized in the mmWave region. As a result, mmWave operation cannot be guaranteed simultaneously with FR1 operation as the impedance match of the mmWave frequencies would be degraded by the dynamic sub-6GHz tuning/matching components. Therefore, in order to use the sub-6GHz radiating structure for the mmWave operation as well, both resonances need to be acting in an independent way.

The above-described small-volume antenna system 10, described in FIGs 1 to 8, overcomes problems of using a single antenna radiating element 20 for 3GPP FR1 (sub-6 GHz) and FR2 (mmWave). The antenna radiating element 20 is resonant for FR1 but is additionally used for FR2.

Using the sub-6GHz resonant antenna radiation element 20 for mmWave can improve the minimum peak equivalent isotropically radiated power (EIRP) and obtain similar coverage as two or three 1x4 antenna arrays. The Q-factor of the sub-6GHz resonant antenna radiation element 20 is very low at mmWave frequencies which can result in a highly efficient antenna (low absorption loss, higher total radiation efficiency).

The antenna system 10 has a feed 30 for the sub-6GHz resonant antenna radiating element 20 such that it can also radiate with good enough performance at mmWave frequencies, i.e., FR2 from 24GHz to 52GHz.

The antenna system 10 provides independence between the first frequency range 101 and the second frequency range 102 even though they use the same antenna radiator element 20, which is dynamically tuned/match for operation at the first frequency range 101 using discrete components with a SRF lower than the second frequency range 102.

In some examples this is achieved by creating a high capacitance in the feed structure for the second frequency range 102, which will bypass 60 tuning/matching circuit 50 for the first frequency range 101, while having a very small impedance at sub-GHz operation, making it invisible at those frequencies. This is achieved while keeping a high isolation between the sub-6GHz antenna feed point 30 and the mmWave antenna feed point 40.

In some examples, an integrated bypass coupling capacitor 64 is designed to act as a short for mmWave frequencies (the second frequency range 102) and as an open for sub-6GHz frequencies (the first frequency range 101), whereby the effects of the uncharacterized inductor 50 at mmWave frequencies (the second frequency range 102) are reduced and have a minimum effect on the mmWave antenna feed point impedance.

The impedance of the mmWave antenna feed point can still be slightly affected by a change of the inductance value of the discrete inductor 50 used for frequency/resonance tuning at sub-6GHz, but the impact is minimal, and the concept proposed can achieve a relatively large frequency bandwidth of approximately 2.5 GHz.

The following features are noted:
There is one antenna element resonance below the SRF of a discrete component 50 (i.e. sub-6GHz) and one antenna element resonance above SRF of the discrete component 50 (i.e. mmWave)
The sub-6 GHz resonance is designed with a discrete inductor 50 for resonance tuning.
The mmWave antenna feed point 40 is self-matched (no need for discrete components).

The placement of the inductor 50 (for sub-6GHz) relative to the mmWave feed 40 makes the inductor 50 transparent at mmWave i.e., in a way that the inductor 50 is not affecting mmWave resonance:
The coupling of the sub-6GHz radiating element 20 [i.e. capacitive coupling between radiating L element 20 and inductor 50 and ground 80] is part of the mmWave feed 40.

The mmWave antenna system 10 comprises a short (inverted F antenna IFA style). The mmWave short is created by capacitive coupling 64 between the radiating elements 20, 80 (seen as a short at mmWave)

The existing short 96 of the mmWave makes the inductor 50 in parallel with this short The value of inductor 50 does not affect mmWave resonance; sub-6GHz matching resonance 50 is transparent to mmWave feed 40.

The examples describe one antenna element resonance below the self-resonance frequency of the discrete component 40 and one resonance above it. It is also possible to have more than 2 feeds with multiple resonances below the self-resonance of the discrete component and multiple resonances above it. An example can be for 6G with 1 feed addresses sub-6GHz resonance, a second feed addresses a new 6G bands in 7-15 GHz region and a third feed addresses mmWave spectrum e.g., 28 GHz.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use `a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An antenna system having at least a first operational bandwidth over at least a first frequency range and a second operational bandwidth over at least a second frequency range, at higher frequency than the first frequency range comprising:
an antenna radiator element;
at least a first feed for the first frequency range coupled to the antenna radiator element;
a second feed for the second frequency range coupled to the antenna radiator element wherein the second frequency range is at higher frequency than the first frequency range;
at least one discrete reactive component coupled to the antenna radiator element,
wherein the at least one discrete reactive component has a self resonant frequency and wherein the at least one discrete reactive component is configured to control the first operational bandwidth of the antenna system, and wherein the self resonant frequency is greater than the first frequency range and less than the second frequency range.

2. An antenna system as claimed in claim 1, comprising a bypass for the second feed around the at least one discrete reactive component.

3. An antenna system as claimed in claim 1 or 2, comprising a current path for the second feed around the at least one discrete reactive component, wherein the current path comprises a high-pass filter.

4. An antenna system as claimed in any preceding claim comprising a passive circuit configured to couple the least one discrete reactive component to the antenna radiator element for the first frequency range and configured to de-couple the least one discrete reactive component from the antenna radiator element at the second frequency range.

5. An antenna system as claimed in claim 4, wherein the passive circuit comprises at least one of the following: first and second conductive elements with a partial overlap, or a series LC circuit tuned to the second frequency range.

6. An antenna system as claimed in any preceding claim, wherein a resonance of the antenna radiator element and/or an impedance match of the first frequency range/ is tuned and the impedance match of the second frequency range is not tuned by changes of the at least one discrete reactive component.

7. An antenna system as claimed in any preceding claim, wherein the antenna system has an electrical length, for the first frequency range, dependent upon the discrete reactive component.

8. An antenna system as claimed in any preceding claim comprising a low pass filter comprising multiple discrete reactive components, wherein the low pass filter is coupled to the antenna radiator element and has a self resonant frequency dependent upon a selected reactive component of the multiple discrete reactive components, wherein the discrete reactive components are configured for tuning at the first frequency range and bypassed at the second frequency range by the high-pass filter.

9. An antenna system as claimed in any preceding claim wherein the second feed is proximal to the at least one discrete reactive component and the first feed is distal from the at least one discrete reactive component.

10. An antenna system as claimed in any preceding claim, wherein the discrete reactive component is a component in a first current path at the first frequency range and wherein the discrete reactive component is not a component in a second current path at the second frequency range.

11. An antenna system as claimed in claim 10, wherein the second current path, where it bypasses the discrete reactive component, has a relatively low impedance at the second frequency range and a relatively high impedance at the first frequency range.

12. An antenna system as claimed in any preceding claim wherein the discrete reactive component couples to a ground plane.

13. An antenna system as claimed in any preceding claim wherein the discrete reactive component is at least one of the following: an inductor or a capacitor.

14. An antenna system as claimed in any preceding claim, configured for simultaneous operation using the first operational bandwidth and the second operational bandwidth.

15. A hand-portable apparatus comprising the antenna system as claimed in any preceding claim.
